(19) Europäisches Patentamt
European Patent Office
Office européen des brevets

(11) **EP 2 140 116 B1**

(12) **FASCICULE DE BREVET EUROPEEN**

(45) Date de publication et mention de la délivrance du brevet:
**19.01.2011 Bulletin 2011/03**

(51) Int Cl.:
*F01N 3/20* *(2006.01)*     *B01D 53/94* *(2006.01)*
*G01N 9/30* *(2006.01)*     *F01N 3/08* *(2006.01)*

(21) Numéro de dépôt: **08788137.1**

(22) Date de dépôt: **07.04.2008**

(86) Numéro de dépôt international:
**PCT/FR2008/050614**

(87) Numéro de publication internationale:
**WO 2008/139108 (20.11.2008 Gazette 2008/47)**

(54) **PROCEDE ET SYSTEME DE DIAGNOSTIC SUR LA COMPOSITION D'UN RESERVOIR, POUR CONTROLER UNE INJECTION SUR CATALYSEUR DE REDUCTION DES OXYDES D'AZOTES**

VERFAHREN UND SYSTEM ZUR DIAGNOSTIZIERUNG DER ZUSAMMENSETZUNG EINES TANKS ZUR STEUERUNG EINER INJEKTION AUF EINEM STICKOXIDREDUKTIONSKATALYSATOR

METHOD AND SYSTEM FOR DIAGNOSING THE COMPOSITION OF A TANK FOR CONTROLLING AN INJECTION ON A NITROGEN-OXIDE REDUCTION CATALYST

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **02.05.2007 FR 0703150**

(43) Date de publication de la demande:
**06.01.2010 Bulletin 2010/01**

(73) Titulaire: **Renault SAS**
**92100 Boulogne Billancourt (FR)**

(72) Inventeurs:
• **BELHALFAOUI, Sami**
**92160 Antony (FR)**

• **MORENO LAHORE, Noel**
**75011 Paris (FR)**

(74) Mandataire: **Religieux, Vincent**
**Renault s.a.s.**
**TCR GRA 2 36**
**1, avenue du Golf**
**F-78288 Guyancourt Cedex (FR)**

(56) Documents cités:
WO-A-01/38704     FR-A- 2 882 353
US-A1- 2005 011 183

## Description

La présente invention concerne, dans le domaine des moteurs à combustion interne, notamment du type Diesel, un procédé et un système de diagnostic sur la composition d'un réservoir d'agent de réaction pour catalyseur. L'invention concerne en particulier un contrôle de conformité de l'agent réducteur (par exemple, contenant de l'ammoniac ou de l'urée) à utiliser lors d'une injection dans un conduit d'échappement faisant partie d'un dispositif antipollution des gaz brûlés.

Dans le domaine de la dépollution dans des véhicules automobiles et notamment la dépollution diesel, des systèmes de post-traitement des gaz de plus en plus complexes sont disposés dans la ligne d'échappement des moteurs à mélange pauvre. Ces systèmes visent à répondre à la baisse des seuils admis pour les émissions de gaz polluants des véhicules automobiles.

Ceux-ci permettent de réduire notamment les émissions de particules et d'oxydes d'azotes en plus du monoxyde de carbone et des hydrocarbures imbrûlés. Le procédé SCR (Selective catalytic Reduction), fonctionnant par injection d'ammoniac, d'urée ou d'une solution aqueuse d'urée, est connu pour être un moyen efficace de traitement des oxydes d'azote NOx. Pour la mise en oeuvre de ce procédé SCR, il est nécessaire d'ajouter un réservoir contenant l'agent réducteur (ammoniac, urée ou solution aqueuse d'urée), et un système d'injection spécifique permettant d'injecter le réducteur dans la ligne d'échappement. En effet, le principe de réduction des oxydes d'azote repose sur une réaction avec l'ammoniac, qu'il convient alors de distribuer à l'échappement en quantité adaptée par rapport à la quantité d'oxydes d'azote à traiter.

La solution la plus classique consiste à avoir un réservoir de solution d'urée, qui se décompose en ammoniac. De plus, le rapport stoechiométrique entre la quantité de composants NOx à traiter et la quantité de réducteur à injecter doit être respecté : un surdosage ne conduisant qu'à augmenter les consommations de réducteur (gaspillage), et potentiellement à des émissions d'ammoniac (composé fortement odorant et très toxique) ; un sous-dosage limitant les efficacités obtenues.

Il est connu dans l'art antérieur, par le document FR 2 882 353, une méthode de contrôle du remplissage d'un réservoir à carburant et d'un réservoir à additif tel que l'urée, par utilisation d'une communication Bluetooth®. Ce type de contrôle ne permet pas une vérification qualitative de la composition de la solution liquide contenue dans le réservoir supplémentaire.

Un remplissage inapproprié du réservoir supplémentaire, prévu dans le véhicule pour stocker l'agent réducteur nécessaire à la réduction des oxydes d'azote, peut poser un problème d'efficacité et fiabilité du procédé SCR ou procédé analogue de dépollution. On comprend en effet que la composition chimique de la solution réductrice est primordiale pour contrôler la réaction d'élimination des composants NOx. C'est de cette composition que dépendra la quantité à injecter en amont du catalyseur SCR afin que l'ammoniac soit présent en quantité stoechiométrique par rapport à la quantité de composants NOx présente dans les gaz d'échappement.

Afin de connaître précisément la composition chimique de la solution réductrice, une solution selon US 20050011183 A1 pourrait être d'implanter dans le réservoir un capteur de composition de la substance réductrice et d'utiliser le signal de ce capteur pour vérifier que le réservoir d'agent réducteur a été correctement rempli. Ce type de solution peut permettre de s'assurer que le client ne remplit pas son réservoir avec une autre substance (par exemple de l'eau) que celle préconisée pour le fonctionnement correct du système de dépollution. Cependant l'ajout d'un capteur dans le réservoir représente un coût d'implantation relativement élevé. De plus, des sources d'erreur ne sont pas supprimées par l'ajout d'un capteur, notamment celles provenant des dérives du capteur.

Une autre solution pourrait être l'ajout d'un capteur de concentration des oxydes d'azote en aval du catalyseur. Dans ce cas, un dysfonctionnement de la fonction «dépollution» peut également être identifié. Toutefois, ce dysfonctionnement peut avoir plusieurs causes, et ne vient pas nécessairement de la nature du liquide contenu dans le réservoir additionnel.

La présente invention a pour but de pallier un ou plusieurs inconvénients de l'art antérieur en proposant un procédé de diagnostic sur la composition d'un agent de réaction contenu dans un réservoir, simple à implémenter, fiable et permettant de contrôler l'injection réalisée sur un catalyseur de réduction des oxydes d'azotes.

Ce but est atteint par un procédé de diagnostic sur la composition d'une solution liquide incluant un agent de réaction et contenue dans un réservoir d'un véhicule automobile, comprenant une étape d'acheminement par une pompe centrifuge de la solution liquide vers au moins un dispositif d'injection implanté dans une ligne d'échappement de gaz brûlés, la pompe centrifuge étant alimentée électriquement, **caractérisé en ce qu'**il comprend, pendant l'étape d'acheminement :

- une étape de transmission vers un dispositif calculateur d'informations représentatives d'une vitesse de rotation de la pompe ;
- une étape de surveillance par le dispositif calculateur d'une évolution de la vitesse de rotation de la pompe par utilisation des informations transmises ; et
- une étape de détection par le dispositif calculateur d'un changement dans la composition de la solution liquide si un seuil prédéterminé de variation est franchi, dans un intervalle de temps déterminé, lors de ladite étape de surveillance.

Ainsi, grâce au procédé selon l'invention, il est permis de se passer de capteur dans le réservoir pour connaître la nature de la substance injectée. Le diagnostic des caractéristiques physiques du liquide présent dans le réservoir d'urée est très avantageusement réalisé de façon indirecte, par exemple en exploitant l'information de la puissance électrique consommée de la pompe.

De plus, dans le cas où l'on dispose d'un capteur de composants NOx (en aval du catalyseur), l'information sur la consommation électrique de la pompe complète l'information donnée par le capteur NOx et aide à identifier la cause d'un dysfonctionnement du système de dépollution.

Selon une autre particularité, l'étape de transmission comprend une transmission vers le dispositif calculateur de signaux électriques issus de la pompe.

Selon une autre particularité, l'étape de surveillance comporte :

- une étape d'évaluation par des moyens de traitement du dispositif calculateur d'une grandeur représentative de la consommation électrique de la pompe, par utilisation des signaux électriques issus de la pompe ; et
- une étape de calcul d'une différence entre deux valeurs obtenues successivement lors de l'étape d'évaluation pour ladite grandeur.

Selon une autre particularité, l'étape d'évaluation comprend une estimation, à intervalles de temps réguliers, de la puissance électrique consommée par la pompe.

Selon une autre particularité, l'étape de détection comprend une étape pour comparer, par des moyens de comparaison du dispositif calculateur, une différence entre deux grandeurs évaluées successivement avec le seuil prédéterminé de variation, l'étape de détection permettant ainsi une détection, lorsque le seuil est franchi, d'une variation brutale de la grandeur évaluée dans un intervalle de temps restreint.

Selon une autre particularité, l'étape de détection comprend pendant une durée déterminée de vérification une étape de contrôle du caractère non-aléatoire de la variation brutale, dans laquelle au moins une des différences calculées ultérieurement est comparée avec ladite variation brutale.

Selon une autre particularité, un coefficient proportionnel ou égal à la densité d'une solution liquide de référence est stocké dans le dispositif calculateur, l'étape de détection permettant de déterminer une modification de la densité d'une solution liquide en utilisant ce coefficient dans l'étape de comparaison.

Selon une autre particularité, le seuil de variation est suffisamment faible pour permettre de détecter une modification de densité de la solution liquide de l'ordre de 0,05 g/cm$^3$, une surpression indépendante de la nature de la solution liquide étant fournie par la pompe centrifuge au liquide alimentant le dispositif d'injection.

Selon une autre particularité, les informations sont transmises lors de l'étape de transmission par un dispositif spécifique de mesure de la vitesse de rotation de la pompe.

Un objet supplémentaire de la présente invention est de proposer, en amont d'un dispositif d'injection implanté dans la ligne d'échappement, un système fiable de diagnostic sur la composition de la solution liquide utilisée pour alimenter le dispositif d'injection, afin de s'assurer que le réservoir associé n'a pas été rempli avec une autre substance.

A cet effet, l'invention concerne un système de diagnostic sur la composition d'une solution liquide incluant un agent de réaction et contenue dans un réservoir d'un véhicule automobile, comprenant une pompe centrifuge en liaison avec le réservoir pour acheminer la solution liquide vers au moins un dispositif d'injection implanté dans une ligne d'échappement de gaz brûlés, des moyens d'alimentation électrique d'un moteur de la pompe, et un dispositif calculateur, **caractérisé en ce qu'**il comporte :

- des moyens de transmission couplés à la pompe pour transmettre vers le dispositif calculateur des informations représentatives d'une vitesse de rotation de la pompe ;
- des moyens de traitement du dispositif calculateur recevant les informations transmises, agencés pour surveiller une évolution de la vitesse de rotation de la pompe, par traitement desdites informations et obtention à partir de ces dernières de valeurs liées à la vitesse de rotation de la pompe ;
- des moyens de comparaison du dispositif calculateur pour déterminer si un seuil prédéterminé de variation est franchi par la différence entre deux valeurs successives liées à la vitesse de rotation de la pompe et calculées dans un intervalle de temps restreint par les moyens de traitement : et
- des moyens de signaler un changement dans la composition de la solution liquide, activables par les moyens de comparaison en cas de franchissement dudit seuil.

Ainsi, le système selon l'invention permet d'indiquer efficacement que la solution liquide utilisée n'est pas la solution optimale pour une dépollution, sans requérir l'ajout d'un capteur de grande précision dans le réservoir.

Selon une autre particularité, les moyens de transmission comportent au moins une liaison connectée au dispositif calculateur et fournissant des signaux électriques issus de la pompe.

Selon une autre particularité, les moyens de traitement sont agencés pour évaluer une grandeur représentative de la consommation électrique de la pompe, par utilisation des signaux électriques issus de la pompe, et calculent régulièrement une différence entre deux valeurs obtenues successivement pour ladite grandeur.

D'autres particularités et avantages de la présente invention apparaîtront plus clairement à la lecture de la description ci-après, faite en référence aux dessins annexés, dans lesquels :

- la figure 1 illustre un système conforme à l'invention, intervenant en amont de l'injection réalisée dans la ligne d'échappement ;
- la figure 2 représente l'évolution de la puissance consommée par la pompe au cours du temps, avec un brusque offset du signal caractéristique d'un changement de la composition de la solution réductrice ;
- la figure 3 montre un logigramme d'étapes d'un procédé de diagnostic conforme à l'invention.

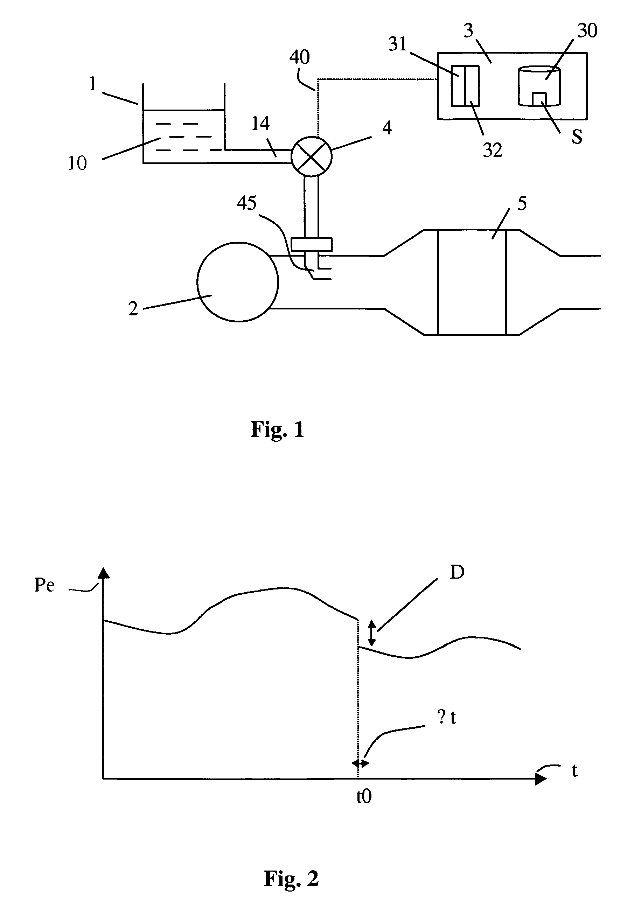

Un injecteur (45) d'urée pour catalyseur (5) de type SCR (Selective catalytic Reduction) ou injecteur analogue est prévu dans une ligne d'échappement dans le mode de réalisation de la figure 1, par exemple en aval d'une turbine (2) refoulant des gaz d'échappement et en amont du catalyseur (5). L'injecteur (45) est alimenté par le réservoir (1) contenant la solution liquide (10) d'agent de réaction. Cet agent de réaction peut être de l'ammoniac, de l'urée ou une solution aqueuse d'urée par exemple. Typiquement, une solution aqueuse de 32,5 % en poids d'urée, est assez répandue comme solution réductrice (par exemple solution Adblue®).

Dans le processus de catalyse proprement dit, l'injection d'une solution (10) composée d'un réactif d'ammoniac (en l'occurrence l'urée et d'eau) s'effectue dans la ligne d'échappement où circulent les gaz brûlés. L'urée est convertie en ammoniac ($NH_3$) et en dioxyde de carbone ($CO_2$) sous l'effet de la chaleur présente dans le système d'échappement. L'ammoniac, la substance active du mélange, est le composant principal du processus qui se déroule dans le catalyseur (5) de type SCR. Au cours du processus chimique catalytique, l'oxyde d'azote (NOx) est converti en azote (N2) et en vapeur d'eau (H2O). En pratique, le moindre résidu d'ammoniac peut être éliminé dans un catalyseur de nettoyage intégré.

Pour optimiser la catalyse de dépollution, la composition de la solution liquide (10) doit préférentiellement rester constante. Il est proposé selon l'invention de vérifier (indirectement) la masse volumique de la solution réductrice en estimant les écarts de consommation électrique de la pompe (4) centrifuge aspirant la solution (10) d'agent réducteur depuis le réservoir (1), via une canalisation (14), jusqu'à l'injecteur (45) implanté dans la ligne d'échappement. Ceci permet d'optimiser le système en évitant d'ajouter un capteur dont l'information serait accessible par d'autres moyens : la pompe (4) électrique est en effet nécessaire pour l'alimentation en solution (10) réductrice, alors qu'un capteur de composition est un élément additionnel uniquement dédié au diagnostic.

La grandeur qui va permettre de caractériser la solution (10) et permettre un diagnostic est donc sa masse volumique (densité), qui est de l'ordre de 1,1 g/cm$^3$ dans l'exemple d'une solution Adblue®. On tire partie du fait que la consommation électrique de la pompe (4) centrifuge utilisée pour l'acheminement de la solution (10) vers l'injecteur (45) peut être reliée à la masse volumique de la solution liquide (10) qui se trouve dans le réservoir (1). On comprend qu'un remplacement d'une solution Adblue de densité 1,1 g/cm$^3$ par de l'eau (de densité égale à 1) peut être détecté. On saura que le fluide utilisé n'est pas adapté si la nouvelle masse volumique est suffisamment différente de celle du fluide préconisé.

Il faut ici rappeler quelle est la relation entre la densité du liquide pompé et la consommation électrique de la pompe (4) centrifuge. De façon connue en soi, lorsqu'un fluide est pompé par une pompe (4) centrifuge, la surpression fournie par la pompe (4) au fluide alimentant l'injecteur (45) est :

$$\Delta P = \frac{1}{2}.\rho.V^2$$

où $\Delta P$ est la surpression entre l'amont et l'aval de la pompe (4) centrifuge (fixée par le tarage du régulateur), $\rho$ est la masse volumique de la solution, V est la vitesse du fluide à la périphérie de la roue de pompe (la vitesse V est le produit du rayon R de la roue avec la vitesse angulaire $\omega$ de rotation de la pompe(4)).

Cette surpression est une constante, qui ne dépend que du tarage du clapet de régulation monté en série avec la pompe (4). Par ailleurs, la vitesse de rotation est proportionnelle à la fréquence des oscillations du courant N qui traverse le moteur électrique de la pompe (4). Le fait que la surpression $\Delta P$ soit indépendante du fluide permet donc d'écrire, pour deux compositions différentes de fluide (indices 1 et 2 pour ces deux compositions :

$$\rho_1 N_1^2 = \rho_2 N_2^2$$

$$\text{Donc } \rho_2 =\, ^2 \rho_1 (N_1^2 / N_2^2) = K / N_2^2$$

Il suffit alors d'identifier le coefficient K (valeur du coefficient $\rho_1.N_1^2$ lorsque la pompe (4) est alimentée par la solution de référence, par exemple Adblue ®), pour pouvoir calculer à tout moment la masse volumique du fluide contenu dans le réservoir (1). Ainsi, si l'utilisateur remplace la solution d'Adblue® par une solution d'eau pure, dont la masse volumique est de 1 g/cm3 au lieu de 1,1 g/cm3, on est en mesure de le diagnostiquer, via l'évolution de la vitesse de rotation de la pompe (4).

En référence à la figure 2, l'observation d'un décalage (D) important (offset) sur la consommation électrique de la pompe (4) pendant une durée importante (pour confirmer que le décalage n'est pas provisoire) permet de diagnostiquer un changement de teneur en urée dans la solution (10) stockée dans le réservoir (1).

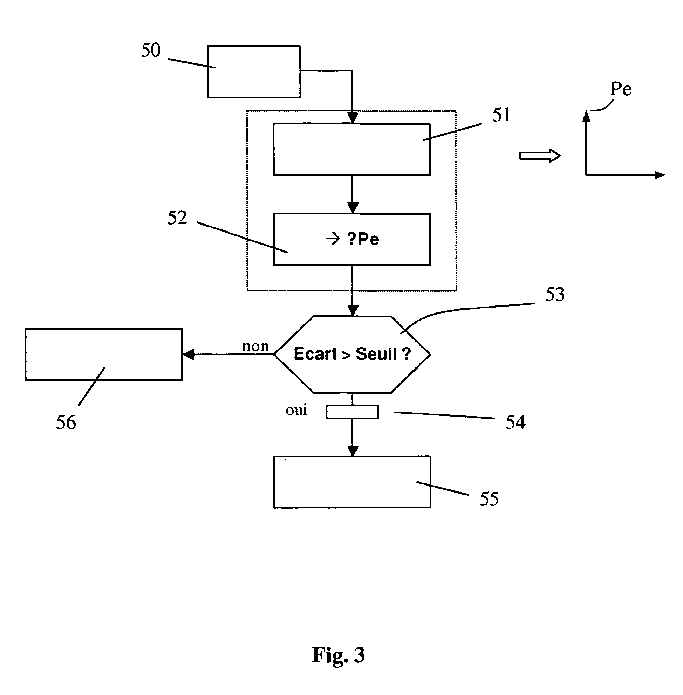

Pour détecter ce type de décalage (D) important, le procédé prévoit dans le mode de réalisation de la figure 3 :

- une étape (50) de transmission vers un dispositif calculateur (3) d'informations représentatives d'une vitesse de rotation de la pompe (4) ;
- une étape (51, 52) de surveillance par le dispositif calculateur (3) d'une évolution de la vitesse de rotation de la pompe (4) par utilisation des informations transmises ; et
- une étape (53, 54) de détection par le dispositif calculateur (3) d'un changement dans la composition de la solution liquide (10) si un seuil (S) prédéterminé de variation est franchi, dans un intervalle de temps (Δt) déterminé, lors de ladite étape (51, 52) de surveillance.

Le procédé peut utiliser seulement un modèle évaluant régulièrement la consommation électrique de la pompe (4), méthode beaucoup moins pénalisante au niveau installation et capteur. En effet, cela permet de réduire le coût de fabrication par l'utilisation d'une installation plus dépouillée. Cela diminue également les sources d'erreur possibles, notamment celles provenant des dérives du capteur.

En référence à la figure 1, l'implantation du système de diagnostic sur la composition de la solution liquide (10) dans la ligne d'échappement peut prévoir des moyens (40) de transmission dotés d'au moins une liaison connectée au dispositif calculateur (3) pour fournir à ce dernier des signaux électriques issus de la pompe (4). Dans l'exemple de la figure 3, l'étape (50) de transmission peut ainsi comprendre une simple transmission de ces signaux électriques vers le dispositif calculateur (3) embarqué. La puissance électrique (Pe) consommée par la pompe peut alors être calculée par des moyens (31) de traitement du dispositif calculateur (3), comme peut l'apprécier l'homme du métier. Une grandeur représentative de la consommation électrique de la pompe (4) peut être ainsi régulièrement calculée ainsi qu'une différence entre deux valeurs obtenues successivement pour cette grandeur.

En référence à la figure 3, l'étape (51 52) de surveillance peut donc comporter :

- une étape (51) d'évaluation par les moyens (31) de traitement d'une grandeur représentative de la consommation électrique de la pompe (4), par utilisation des signaux électriques issus de la pompe (4) ; et
- une étape (52) de calcul d'une différence entre deux valeurs obtenues successivement lors de l'étape (51) d'évaluation.

Les valeurs calculées au cours du temps (t) peuvent être stockées dans une mémoire (30) du dispositif calculateur (3). Une même valeur de puissance électrique (Pe) consommée ou grandeur analogue peut être utilisée dans plusieurs calculs de différences ΔPe avec des valeurs étalées dans le temps (t). Comme peut l'apprécier l'homme du métier, l'évaluation régulière de la consommation électrique de la pompe peut être réalisée par divers calculs de comparaison entre des valeurs régulièrement calculées au cours du temps (t).

Dans une forme de réalisation, les informations reçues par le dispositif calculateur (3) peuvent être transmises lors de l'étape (50) de transmission par un dispositif spécifique de mesure de la vitesse de rotation de la pompe (4). Il peut s'agir d'un dispositif à codeur optique couplé au rotor de la pompe (4) ou autre dispositif similaire de renseignement sur la vitesse de rotation.

Le dispositif calculateur (3) comporte une mémoire (30) pour stocker au moins un seuil (S) prédéterminé de variation pour permettre la détection d'un décalage (offset) important. En référence aux figures 1 à 3, l'étape (53, 54) de détection peut avantageusement comprendre une étape (53) pour comparer, par des moyens (32) de comparaison du dispositif calculateur (3), une différence entre deux grandeurs évaluées successivement avec le seuil (S), une détection (54) étant ainsi permise lorsque le seuil (S) est franchi. Une variation brutale de la grandeur évaluée dans un intervalle de temps (Δt) restreint peut être avantageusement détectée (54) pour signaler ensuite (55) un changement dans la composition de la solution liquide (10), par exemple à l'aide d'un signal d'alerte, de l'activation d'un voyant spécifique ou tout autre signalement approprié. L'étape (53, 54) de détection peut prévoir, pendant une durée déterminée de vérification, une étape de contrôle du caractère non-aléatoire de la variation brutale. Au moins une des différences calculées ultérieurement est par exemple comparée avec ladite variation brutale. Si une différence inverse est décelée juste après une différence dépassant le seuil (S), alors cela signifie que la variation est passagère et celle-ci peut ne pas être signalée. Une étape (56) facultative d'envoi d'un signal de conformité peut être réalisée dans ce cas et/ou si aucune variation brutale n'est détectée.

L'exemple de la figure 2 montre l'évolution de la puissance consommée par la pompe au cours du temps avec à un moment précis (t0), un brusque décalage (D) du signal qui est caractéristique d'un changement de la composition de la solution (10) d'agent de réaction. Le décalage peut être détecté en soi dans un intervalle de temps (Δt) restreint. Dans un mode de réalisation préféré de l'invention, il faut de préférence attendre une durée plus importante pour vérifier que ce décalage (D) correspond à un changement de la composition de la solution liquide (10) contenue dans le réservoir (1).

Le coefficient K ou autre coefficient proportionnel ou égal à la densité de la solution liquide de référence peut être stocké dans le dispositif calculateur (3). L'étape (53, 54) de détection permet de déterminer une modification de la densité d'une solution liquide en utilisant par exemple ce coefficient dans l'étape (53) de comparaison. Plus généralement, on comprend que le modèle utilisé permet de détecter un changement brusque au niveau de la consommation électrique de la pompe (4) et il est permis de signaler à l'utilisateur une perte d'efficacité de dépollution due à l'utilisation d'une solution réductrice non conforme.

Le seuil (S) de variation est par exemple choisi suffisamment faible pour permettre de détecter une modification de densité de la solution liquide (10) de l'ordre de 0,05 g/cm$^3$. Une variation de l'ordre de 0,01 ou 0,02 g/cm$^3$ pourrait être aussi détectée. Le choix d'un seuil faible peut être compensé par l'attente une période de confirmation du décalage importante.

Si la proportion d'urée dans le réservoir est légèrement modifiée (ajout d'eau dans un réservoir pas complètement vidé), le décalage observé sur la puissance consommée peut être trop faible pour être observé. Cependant, cela signifie dans ce cas que l'altération de la dépollution est également minime. Le coefficient K ou coefficient analogue peut servir d'étalon afin qu'une succession de légères modifications de la composition soit détectée.

Par ailleurs, le vieillissement de la pompe peut être pris en compte, dans le suivi de la puissance consommée. Une modélisation de ce vieillissement peut être prévue pour modifier le coefficient. Le vieillissement peut typiquement se caractériser par l'altération de la consommation électrique (c'est-à-dire par une variation du coefficient K). Il faut dans ce cas bien connaître l'amplitude d'évolution du coefficient K au cours de la vie de la pompe (4), cette amplitude devant rester naturellement suffisamment faible par rapport à l'écart de masse volumique entre la solution de référence telle que l'Adblue® et l'eau (robustesse de la calibration de K). En réalité, les variations du coefficient K, si elles existent, sont assez lentes par rapport à la fréquence de remplissage du réservoir d'urée. Par conséquent, on peut au moins s'appuyer sur les discontinuités de la fonction $K/N_2^2$, pour peu que les contrastes soient suffisamment marqués (notion de seuil de détection à paramétrer comme peut l'apprécier l'homme du métier).

Il doit être évident pour les personnes du métier que la présente invention permet des modes de réalisation sous de nombreuses autres formes spécifiques sans l'éloigner du domaine d'application de l'invention comme revendiqué.

**Revendications**

1. Procédé de diagnostic sur la composition d'une solution liquide (10) incluant un agent de réaction et contenue dans un réservoir (1) d'un véhicule automobile, comprenant une étape d'acheminement par une pompe (4) centrifuge de la solution liquide (10) vers au moins un dispositif d'injection (45) implanté dans une ligne d'échappement de gaz brûlés, la pompe (4) centrifuge étant alimentée électriquement, **caractérisé en ce qu'**il comprend, pendant l'étape d'acheminement :

   - une étape (50) de transmission vers un dispositif calculateur (3) d'informations représentatives d'une vitesse de rotation de la pompe (4) ;
   - une étape (51, 52) de surveillance par le dispositif calculateur (3) d'une évolution de la vitesse de rotation de la pompe (4) par utilisation des informations transmises ; et
   - une étape (53, 54) de détection par le dispositif calculateur (3) d'un changement dans la composition de la solution liquide (10) si un seuil (S) prédéterminé de variation est franchi, dans un intervalle de temps (Δt) déterminé, lors de ladite étape (51, 52) de surveillance.

2. Procédé selon la revendication 1, dans lequel l'étape (50) de transmission comprend une transmission vers le dispositif calculateur (3) de signaux électriques issus de la pompe (4).

3. Procédé selon la revendication 2, dans lequel l'étape (51 52) de surveillance comporte :

   - une étape (51) d'évaluation par des moyens (31) de traitement du dispositif calculateur (3) d'une grandeur représentative de la consommation électrique de la pompe (4), par utilisation des signaux électriques issus de la pompe (4); et
   - une étape (52) de calcul d'une différence entre deux valeurs obtenues successivement lors de l'étape (51) d'évaluation pour ladite grandeur.

4. Procédé selon la revendication 3, dans lequel l'étape d'évaluation comprend une estimation, à intervalles de temps réguliers, de la puissance électrique (Pe) consommée par la pompe (4).

5. Procédé selon une des revendications 2 à 4, dans lequel l'étape (53, 54) de détection comprend une étape (53) pour comparer, par des moyens (32) de comparaison du dispositif calculateur (3), une différence entre deux grandeurs évaluées successivement avec le seuil (S) prédéterminé de variation, l'étape (53, 54) de détection permettant ainsi une détection (54), lorsque le seuil (S) est franchi, d'une variation brutale de la grandeur évaluée dans un intervalle de temps (Δt) restreint.

6. Procédé selon la revendication 5, dans lequel l'étape (53, 54) de détection comprend pendant une durée déterminée de vérification une étape de contrôle du caractère non-aléatoire de la variation brutale, dans laquelle au moins une des différences calculées ultérieurement est comparée avec ladite variation brutale.

**7.** Procédé selon la revendication 5 ou 6, dans lequel un coefficient proportionnel ou égal à la densité d'une solution liquide de référence est stocké dans le dispositif calculateur (3), l'étape (53, 54) de détection permettant de déterminer une modification de la densité d'une solution liquide en utilisant ce coefficient dans l'étape (53) de comparaison.

**8.** Procédé selon une des revendications 1 à 7, dans lequel le seuil (S) de variation est suffisamment faible pour permettre de détecter une modification de densité de la solution liquide (10) de l'ordre de 0,05 g/cm$^3$, une surpression indépendante de la nature de la solution liquide (10) étant fournie par la pompe (4) centrifuge au liquide alimentant le dispositif d'injection.

**9.** Procédé selon la revendication 1, dans lequel les informations sont transmises lors de l'étape (50) de transmission par un dispositif spécifique de mesure de la vitesse de rotation de la pompe (4).

**10.** Système de diagnostic sur la composition d'une solution liquide (10) incluant un agent de réaction et contenue dans un réservoir (1) d'un véhicule automobile, comprenant une pompe (4) centrifuge en liaison avec le réservoir (1) pour acheminer la solution liquide (10) vers au moins un dispositif d'injection (45) implanté dans une ligne d'échappement de gaz brûlés, des moyens d'alimentation électrique d'un moteur de la pompe (4), et un dispositif calculateur (3), **caractérisé en ce qu'**il comporte :

> - des moyens (40) de transmission couplés à la pompe (4) pour transmettre vers le dispositif calculateur (3) des informations représentatives d'une vitesse de rotation de la pompe (4) ;
> - des moyens (31) de traitement du dispositif calculateur (3) recevant les informations transmises, agencés pour surveiller une évolution de la vitesse de rotation de la pompe (4), par traitement desdites informations et obtention à partir de ces dernières de valeurs liées à la vitesse de rotation de la pompe (4) ;
> - des moyens (32) de comparaison du dispositif calculateur (3) pour déterminer si un seuil (S) prédéterminé de variation est franchi par la différence entre deux valeurs successives liées à la vitesse de rotation de la pompe (4) et calculées dans un intervalle de temps (Δt) restreint par les moyens (31) de traitement ; et
> - des moyens de signaler un changement dans la composition de la solution liquide (10), activables par les moyens (32) de comparaison en cas de franchissement dudit seuil (S).

**11.** Système selon la revendication 10, dans lequel les moyens (40) de transmission comportent au moins une liaison connectée au dispositif calculateur (3) et fournissant des signaux électriques issus de la pompe (4).

**12.** Système selon la revendication 10 ou 11, dans lequel les moyens (31) de traitement sont agencés pour évaluer une grandeur représentative de la consommation électrique de la pompe (4), par utilisation des signaux électriques issus de la pompe (4), et calculent régulièrement une différence entre deux valeurs obtenues successivement pour ladite grandeur.

## Claims

**1.** Method for diagnosing the composition of a liquid solution (10) including a reagent and contained in a tank (1) of a motor vehicle, comprising a step of delivering via a centrifugal pump (4) the liquid solution (10) to at least one injection device (45) installed in a burnt gas exhaust line, the centrifugal pump (4) being powered electrically, **characterized in that** it comprises, during the delivery step:

> - a step (50) of transmission to a device (3) for computing information representative of a rotation speed of the pump (4);
> - a supervision step (51, 52) by the computing device (3) of a change in the rotation speed of the pump (4) by use of the transmitted information; and
> - a step (53, 54) of detection by the computing device (3) of a change in the composition of the liquid solution (10) if a predetermined threshold (S) of variation is exceeded, in a determined period of time (Δt) during the said supervision step (51, 52).

**2.** Method according to Claim 1, in which the transmission step (50) comprises a transmission to the computing device (3) of a electric signals originating from the pump (4).

**3.** Method according to Claim 2, in which the supervision step (51, 52) comprises:

> - a step (51) of evaluation by processing means (31) of the computing device (3) of a magnitude representative of the electrical consumption of the pump (4), by use of the electric signals originating from the pump (4); and
> - a step (52) of computing a difference between two values obtained successively during the step (51) of evaluation for the said magnitude.

**4.** Method according to Claim 3, in which the evaluation step comprises an estimate, at regular time intervals, of the electrical power (Pe) consumed by the pump (4).

5. Method according to one of Claims 2 to 4, in which the detection step (53, 54) comprises a step (53) for comparing, by comparison means (32) of the computing device (3), a difference between two successively evaluated magnitudes with the predetermined threshold (S) of variation, the detection step (53, 54) thus allowing a detection (54), when the threshold (S) is exceeded, of a sharp variation in the magnitude evaluated in a short time period ($\Delta t$).

6. Method according to Claim 5, in which the detection step (53, 54) comprises, for a determined verification period, a step of checking the non-randomness of the sharp variation, in which at least one of the subsequently computed differences is compared with the said sharp variation.

7. Method according to Claim 5 or 6, in which a coefficient proportional or equal to the density of a reference liquid solution is stored in the computing device (3), the detection step (53, 54) making it possible to determine a change in the density of a liquid solution by using this coefficient in the comparison step (53).

8. Method according to one of Claims 1 to 7, in which the threshold (S) of variation is sufficiently low to make it possible to detect a change in the density of the liquid solution (10) of the order of 0.05 g/cm$^3$, an overpressure independent of the nature of the liquid solution (10) being supplied by the centrifugal pump (4) to the liquid supplying the injection device.

9. Method according to Claim 1, in which the information is transmitted during the transmission step (50) by a specific device for measuring the rotation speed of the pump (4).

10. System for diagnosing the composition of a liquid solution (10) including a reagent and contained in a tank (1) of a motor vehicle, comprising a centrifugal pump (4) connected to the reservoir (1) to deliver the liquid solution (10) to at least one injection device (45) installed in a burnt gas exhaust line, means for supplying electric power to a motor of the pump (4), and a computing device (3), **characterized in that** it comprises:

- transmission means (40) coupled to the pump (4) to transmit to the computing device (3) information representative of a rotation speed of the pump (4);
- processing means (31) of the computing device (3) receiving the transmitted information, arranged to monitor a change in the rotation speed of the pump (4), by processing the said information and obtaining from the latter values associated with the rotation speed of the pump (4);
- comparison means (32) of the computing device (3) for determining whether a predetermined threshold (S) of variation is exceeded by the difference between two successive values associated with the rotation speed of the pump (4) and computed in a short time period ($\Delta t$) by the processing means (31); and
- means for signalling a change in the composition of the liquid solution (10), which means being able to be activated by the comparison means (32) in the event of the said threshold (S) being exceeded.

11. System according to Claim 10, in which the transmission means (40) comprise at least one link connected to the computing device (3) and supplying electric signals originating from the pump (4).

12. System according to Claim 10 or 11, in which the processing means (31) are arranged to evaluate a magnitude representative of the electrical consumption of the pump (4) by use of the electric signals originating from the pump (4), and regularly calculate a difference between two values obtained successively for the said magnitude.

**Patentansprüche**

1. Diagnoseverfahren für die Zusammensetzung einer flüssigen Lösung (10), die ein Reaktionsmittel enthält und in einem Reservoir (1) eines Kraftfahrzeugs enthalten ist, umfassend einen Schritt des Zuführens der flüssigen Lösung (10) durch eine Zentrifugalpumpe (4) zu mindestens einer Einspritzvorrichtung (45), die in einer Auspuffleitung für Abgase angeordnet ist, wobei die Zentrifugalpumpe (4) mit elektrischem Strom versorgt wird, **dadurch gekennzeichnet, dass** es während des Zuführungsschritts Folgendes umfasst:

- einen Schritt (50) des Übertragens von Informationen, die für eine Rotationsgeschwindigkeit der Pumpe (4) repräsentativ sind, zu einer Rechenvorrichtung (3);
- einen Schritt (51, 52) des Überwachens einer Entwicklung der Rotationsgeschwindigkeit der Pumpe (4) durch Verwendung der übertragenen Informationen, durch die Rechenvorrichtung (3); und
- einen Schritt (53, 54) des Erkennens einer Änderung in der Zusammensetzung der flüssigen Lösung (10), wenn während dieses Überwachungsschritts (51, 52) in einem bestimmten Zeitintervall ($\Delta t$) ein vorbestimmter Variationsschwellenwert (S) überschritten wird, durch die Rechenvorrichtung (3).

2. Verfahren nach Anspruch 1, wobei der Übertragungsschritt (50) eine Übertragung von elektrischen Signalen, die von der Pumpe (4) ausgegeben werden, zur Rechenvorrichtung (3) umfasst.

3. Verfahren nach Anspruch 2, wobei der Überwachungsschritt (51, 52) Folgendes umfasst:

   - einen Schritt des Schätzens (51) einer Größe, die repräsentativ für den Stromverbrauch der Pumpe (4) ist, durch Verarbeitungsmittel (31) der Rechenvorrichtung (3), indem die von der Pumpe (4) ausgegebenen elektrischen Signale verwendet werden; und
   - einen Schritt des Berechnens (52) einer Differenz zwischen zwei Werten, die während des Bewertungsschritts (51) nacheinander für diese Größe erhalten werden.

4. Verfahren nach Anspruch 3, wobei der Schätzschritt eine Schätzung der elektrischen Leistung (Pe) in regelmäßigen Zeitintervallen umfasst, die von der Pumpe (4) verbraucht wird.

5. Verfahren nach einem der Ansprüche 2 bis 4, wobei der Erkennungsschritt (53, 54) einen Schritt (53) umfasst, um durch Vergleichsmittel (32) der Rechenvorrichtung (3) eine Differenz zwischen zwei nacheinander bewerteten Größen mit dem vorbestimmten Variationsschwellenwert (S) zu vergleichen, wodurch der Erkennungsschritt (53, 54) bei Überschreitung des Schwellenwerts (S) eine Erkennung (54) einer plötzlichen Variation der Größe erlaubt, die in einem beschränkten Zeitintervall ($\Delta t$) bewertet wird.

6. Verfahren nach Anspruch 5, wobei der Erkennungsschritt (53, 54) während einer bestimmten Prüfdauer einen Schritt der Kontrolle der Nichtzufälligkeit der plötzlichen Variation umfasst, in welchem mindestens eine der Differenzen, die anschließend berechnet werden, mit dieser plötzlichen Variation verglichen wird.

7. Verfahren nach Anspruch 5 oder 6, wobei ein Koeffizient, der proportional zu oder gleich der Dichte einer flüssigen Bezugslösung ist, in der Rechenvorrichtung (3) gespeichert ist, wobei der Erkennungsschritt (53, 54) es erlaubt, eine Änderung der Dichte einer flüssigen Lösung zu erkennen, indem er diesen Koeffizienten im Vergleichsschritt (53) verwendet.

8. Verfahren nach einem der Ansprüche 1 bis 7, wobei der Variationsschwellenwert (S) niedrig genug ist, um eine Änderung der Dichte der flüssigen Lösung (10) in der Größenordnung von 0,05 g/m$^3$ zu erkennen, wobei ein Überdruck, der von der Art der flüssigen Lösung (10) unabhängig ist, von der Zentrifugalpumpe (4) auf die Flüssigkeit angelegt wird, mit welcher die Einspritzvorrichtung versorgt wird.

9. Verfahren nach Anspruch 1, wobei die Informationen während des Übertragungsschritts (50) durch eine spezifische Vorrichtung zur Messung der Rotationsgeschwindigkeit der Pumpe (4) übertragen werden.

10. Diagnosesystem für die Zusammensetzung einer flüssigen Lösung (10), die ein Reaktionsmittel enthält und in einem Reservoir (1) eines Kraftfahrzeugs enthalten ist, umfassend eine Zentrifugalpumpe (4), die mit dem Reservoir (1) verbunden ist, um die flüssige Lösung (10) mindestens einer Einspritzvorrichtung (45), die in einer Auspuffleitung für Abgase angeordnet ist, zuzuführen, Mittel zur Stromversorgung eines Motors der Pumpe (4) und eine Rechenvorrichtung (3), **dadurch gekennzeichnet, dass** es Folgendes umfasst:

   - Übertragungsmittel (40), die mit der Pumpe (4) gekoppelt sind, um Informationen, die für eine Rotationsgeschwindigkeit der Pumpe (4) repräsentativ sind, zu einer Rechenvorrichtung (3) zu übertragen;
   - Verarbeitungsmittel (31) der Rechenvorrichtung (3), welche die übertragenen Informationen empfängt, die angeordnet sind, um durch Verarbeitung dieser Informationen eine Entwicklung der Rotationsgeschwindigkeit der Pumpe (4) zu überwachen und von diesen Letzteren ausgehend Werte zu erhalten, die mit der Rotationsgeschwindigkeit der Pumpe (4) verbunden sind;
   - Vergleichsmittel (32) der Rechenvorrichtung (3), um anhand der Differenz zwischen zwei aufeinanderfolgenden Werten, die mit der Rotationsgeschwindigkeit der Pumpe (4) verbunden sind und in einem beschränkten Zeitintervall ($\Delta t$) von den Verarbeitungsmitteln (31) berechnet werden, zu bestimmen, ob ein vorbestimmter Variationsschwellenwert (S) überschritten wird; und
   - Mittel zur Signalisierung einer Änderung in der Zusammensetzung der flüssigen Lösung (10), die bei Überschreitung dieses' Schwellenwerts (S) von den Vergleichsmitteln (32) betätigt werden können.

11. System nach Anspruch 10, wobei die Übertragungsmittel (40) mindestens eine Verbindung umfassen, die mit der Rechenvorrichtung (3) verbunden ist und elektrische Signale zuführt, die von der Pumpe (4) ausgegeben werden.

12. System nach Anspruch 10 oder 11, wobei die Verarbeitungsmittel (31) angeordnet sind, um eine Grö-

**EP 2 140 116 B1**

ße zu bewerten, die für den Stromverbrauch der Pumpe (4) repräsentativ ist, indem die von der Pumpe (4) ausgegebenen elektrischen Signale verwendet werden, und regelmäßig eine Differenz zwischen zwei Werten berechnen, die nacheinander für diese Größe erhalten werden.

**Fig. 1**

**Fig. 2**

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2882353

- US 20050011183 A1